# EUROPEAN PATENT APPLICATION

(11) **EP 1 705 162 A1**
(43) Date of publication of application: **27.09.2006**
(21) Application number: 05405259.2
(22) Date of filing: 23.03.2005
(51) Int. Cl.: C03C 17/00

(54) **Coated substrate and process for the manufacture of a coated substrate**

(71) Applicant: EMPA Eidgenössische Materialprüfungs- und Forschungsanstalt, CH-8600 Dübendorf (CH)
(72) Inventor: Haug, Franz-Josef, 8600 Dübendorf (CH)
(74) Representative: Heinen, Detlef

(57) **Abstract**

A coated substrate comprises a substrate (S) and a crystalline/amorphous two-phase coating of great hardness. The coating comprises a crystalline substance and an amorphous substance as a matrix. The crystalline substance and the amorphous substance are immiscible and are deposited on the substrate (S) simultaneously. The crystalline/amorphous two-phase coating is transparent at least to visible light.

## Description

The invention relates to a coated substrate according to the preamble of the independent apparatus claim, as well as to a process for the manufacture of a coated substrate according to the independent process claim.

Coatings for wear protection that make use of nano-structures are generally known. For example, multi-layer structures such as WC/TiC (tungsten carbide/titanium carbide) as well as two-phase single-layer structures of immiscible substances that are deposited simultaneously (TiN/SiNₓ). However, these coatings suffer from the disadvantage that they are non-transparent.

Conventional hard coatings that are used for ophthalmic applications (e.g. on glass or plastic substrates for spectacle glasses) are called "hard" but their hardness is only up to 10 GPa. They are usually made from silicon oxide or titanium oxide. Scratch resistant coatings having a hardness of about 20 GPa or more are extremely difficult to produce and are often limited to thin film thicknesses such as up to a few tens of nanometers (e.g. up to 50 nm).

The instant invention now suggests a coated substrate comprising a substrate and a crystalline/amorphous two-phase coating of great hardness (i.e. a hardness of about 20 GPa or more). The coating comprises a crystalline substance and an amorphous substance as a matrix. The crystalline substance and the amorphous substance are immiscible and are deposited on the substrate simultaneously so as to form the crystalline/amorphous two-phase coating. This crystalline/amorphous two-phase coating is transparent at least to visible light. Such coated substrates are comparatively easy to manufacture in a well-controlled process, for example by using a physical vapour deposition process (PVD-process) as will be described in more detail further below.

In a preferred embodiment of the coated substrate, the crystalline substance is selected from the group consisting of aluminium nitride, boron nitride, gallium nitride and indium nitride, or alloys thereof, and wherein the amorphous substance is silicon nitride. These crystalline substances (including the alloys thereof) show the desired hardness and are at the same time highly transparent, so that coatings obtained using these substances can be applied to glass which may be used, by way of example, for scanners, displays, sensors or architectural glass. Also, the coatings may be used for ophthalmic applications, such as for spectacle glasses or plastics. In a preferred embodiment, the crystalline substance is aluminium nitride.

In still a further embodiment of the coated substrate the thickness of the coating is up to 2µm. Conventional transparent coatings having a thickness in this range are hitherto not known, since the substances used for manufacturing of the coatings were not suitable to obtain coatings having the afore-mentioned thickness.

A further aspect of the invention is related to a process for the manufacture of a coated substrate. In this process a substrate is coated with a crystalline/amorphous two-phase coating having great hardness. The crystalline substance and the amorphous substance are immiscible and are applied to the substrate simultaneously so as to form the two phase crystalline/amorphous coating. The crystalline and amorphous substances are selected such that the crystalline/amorphous two-phase coating formed on the substrate is transparent at least to visible light.

In a preferred variant of this process the crystalline substance is selected from the group consisting of aluminium nitride, boron nitride, gallium nitride and indium nitride, or alloys thereof, and the amorphous substance is silicon nitride. More preferably, aluminium nitride is selected as the crystalline substance.

The crystalline and amorphous substances in accordance with a variant of the process are deposited on the substrate using a reactive physical vapour deposition process. In particular, for the deposition of the two substances at least two spatially separated targets may be used. Alternatively, a single compound target may be used, so that the compound target comprises an alloy of the two substances (e.g. Al,Si) in the respective required amounts. The unmixing of the two substances occurs even in this case, and in case of too low a reactivity of the deposited substances at the surface of the substrate, reactivity may be improved by supplying a high frequency voltage to the substrate holder or to the surface of the substrate (see below). Also, prior to depositing the two substances on the substrate the substrate may be heated to a temperature above room temperature, for example to a temperature of 200°C.

In a further variant of the process a high frequency bias voltage is applied between a holder of the substrate or the surface of the substrate, respectively, and a grounded wall of the vacuum chamber in which the two substances are deposited on the substrate. It is thus possible to improve deposition of the crystalline/amorphous substances to form the crystalline/amorphous transparent two-phase coating.

In a further variant of the process an inert gas is supplied in the spatial area of the target of the crystalline substance, while in the spatial area of the target of the amorphous substance the reactive gas, e.g. nitrogen, is supplied.

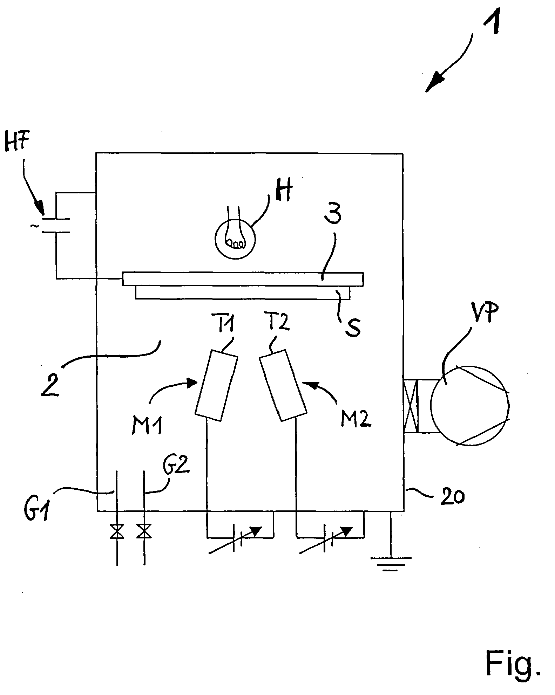

Further advantageous embodiments or variants of the invention will now be described with the aid of the drawing, in which the only drawing figure shows an embodiment of an apparatus for performing an embodiment of the process according to the invention, which forms the coated substrate with the crystalline/amorphous two-phase transparent coating. The process describe in the following is, however, only one example of how to perform the process according to the invention.

The physical vapour deposition apparatus 1 comprises a vacuum chamber 2 that is evacuated by means of a suitable vacuum pump VP that is known *per se.* A typical range for the pressure within vacuum chamber 2 during the reaction is from 0.1 to 1 Pa. A holder 3 for a substrate S to be coated is arranged within vacuum chamber 2. Between substrate holder 3 (or between the surface of substrate S) and the grounded wall 20 surrounding vacuum chamber 2 a high frequency bias voltage may be applied. This measure may assist the deposition process by generating a plasma in the area of the surface of substrate S thus improving the deposition of the substances of the coating as will be described further below.

Two targets T1 and T2 are arranged spatially separated within vacuum chamber 2. For example, target T1 may be a silicon target and target T2 may be an aluminium target. Targets T1 and T2 form the cathode of respective magnetrons M1 and M2, which serve for sputtering the substances onto the surface of substrate S. The magnetrons M1 and M2 assist in concentrating the plasma density in the area near targets T1 and T2 thus improving the sputtering rate.

Two gas inlets G1 and G2 are also shown in the drawing figure. They supply a reactive gas, e.g. nitrogen, and an inert gas (e.g. argon), respectively, into vacuum chamber 2. The supply rate may for example, be 2 sccm nitrogen (ccm/s in a standard environment with a pressure 101.3 kPa and a temperature of 0°C) and 20 sccm argon. However, the supply rate is dependent from the respective PVD-apparatus used and from the evacuation rate of vacuum pump VP.

The sputtering of the substances is a known process and operates essentially such, that plasma ions of the argon plasma erode atoms or clusters of atoms from targets T1 and T2. The magnetrons M1 and M2 serve for local concentration of the plasma density in the area of targets T1 and T2 so as to increase the erosion rate. The power densities (power/area) at the targets are, for example, 10 W/cm² at aluminium target T2 and about 1-2 W/cm² at silicon target T1. However, it is essential that the substances are sputtered simultaneously onto the surface of substrate S so that the crystalline and amorphous substances are deposited on the surface of substrate S simultaneously in order to form the desired two-phase transparent hard coating.

In a specific embodiment it may be desirable that silicon nitride is directly sputtered onto the surface of substrate S, since silicon may only be comparatively poorly reactive on the surface of substrate S. For that reason, gas inlet G1, through which the reactive gas, e.g. nitrogen, is supplied into vacuum chamber 2, may be arranged in the area of silicon target T1 (or even the inlet extends through target T1), so that the surface of silicon target T1 is nitrided and thus silicon nitride is sputtered onto the surface of substrate S rather than pure silicon. The gas inlet G2 through which the inert gas, e.g. argon, is supplied into vacuum chamber 2 may be arranged in the area of aluminium target T2, so that the surface of aluminium target T2 is not nitrided but rather it is aluminium that is sputtered onto the surface of substrate S. However, aluminium has a reactivity sufficient to form the aluminium nitride on the surface of substrate S so that aluminium nitride is thus deposited on the surface of substrate S.

Alternatively or in combination, reactivity can be improved by means of a high frequency voltage that is applied by a high frequency voltage source HF to substrate holder 3 or to the surface of substrate S. In addition, a heater H may be arranged within vacuum chamber 2 in order to heat substrate S to a certain temperature above room temperature, e.g. to about 200°C. Also, substrate S may be preheated outside vacuum chamber 2 and be introduced into vacuum chamber 2 in a preheated state. However, also lower temperatures or-even room temperature of substrate S may be possible, so that heating substrate S is only optional.

The hardness of the thus obtained coatings (for the above-described example an AlN/Si₃N₄ coating) of a glass substrate may be in the range of from 20 GPa to 25 GPa and may have a thickness of up to 2 µm (in particular 1-2µm). The hardness is a Vickers hardness but does not necessarily need to be measured with the standard geometry for obtaining the Vickers hardness but may be measured with a geometry according to Berkovich (see, for example: G.M. Pharr, W.C. Oliver, F.R. Brotzen J. Mat. Res. 7 (1992), page 1 ff.; W.C. Oliver, G.M. Pharr, J. Mat. Res. 7 (1992) page 1564 ff.; T.F. Page, S.V. Hainsworth, Surface Coating Technol. 61 81993, pages 201 ff.). Also, the coating is resistant to corrosion. The size of the grains of the crystalline substance (here: A1N) is up to 20 nm and may be determined using x-ray diffraction methods and/or tunnel electron microscopy.

The afore-described variant of the process has been described for aluminium nitride (AlN) as the crystalline substance (aluminium target) of the two-phase transparent hard coating. Transparency is at least given in the wavelength range of the visible light (i.e. between about 400 nm and 800 nm). While aluminium nitride (AlN) is a preferred crystalline substance, other substances can also be used. For example, it is as well possible to use boron nitride (BN; boron target), gallium nitride (GaN; gallium target), or indium nitride (InN; indium target), or alloys thereof.

Also, the process for manufacturing the coating has been described by way of example using a PVD-process. However, it is also conceivable that other processes like CVD (chemical vapour deposition) be used.

## Claims

1. Coated substrate comprising a substrate (S) and a crystalline/amorphous two-phase coating of great hardness, the coating comprising a crystalline substance and an amorphous substance as a matrix, the crystalline substance and the amorphous substance being immiscible and being deposited on the substrate (S) simultaneously, **characterized in that** the crystalline/amorphous two-phase coating is transparent at least to visible light.

2. Coated substrate according to claim 1, wherein the crystalline substance is selected from the group consisting of aluminium nitride (AlN), boron nitride (BN), gallium nitride (GaN) and indium nitride (InN), or alloys thereof, and wherein the amorphous substance is silicon nitride (Si₃N₄).

3. Coated substrate according to claim 2, wherein the crystalline substance is aluminium nitride (AlN).

4. Coated substrate according to any one of the preceding claims wherein the thickness of the coating is up to 2µm.

5. Process for the manufacture of a coated substrate, in which a substrate (S) is coated with a crystalline/amorphous two-phase coating having great hardness, wherein the crystalline substance and the amorphous substance are immiscible and are applied to the substrate (S) simultaneously so as to form the two phase crystalline/amorphous coating, **characterized in that** the crystalline and amorphous substances are selected such that the crystalline/amorphous two-phase coating formed on the substrate is transparent at least to visible light.

6. Process according to claim 5, wherein the crystalline substance is selected from the group consisting of aluminium nitride (AlN), boron nitride (BN), gallium nitride (GaN) and indium nitride (InN), or alloys thereof, and wherein the amorphous substance is silicon nitride (Si₃N₄).

7. Process according to claim 6, wherein aluminium nitride (A1N) is selected as the crystalline substance.

8. Process according to any one of claims 5 to 7, wherein the crystalline and amorphous substances are deposited on the substrate (S) using a reactive physical vapour deposition process.

9. Process according to claim 8, wherein for the deposition of the two substances a single compound target is used.

10. Process according to claim 8, wherein for the deposition of the two substances at least two spatially separated targets (T1,T2) are used.

11. Process according to any one of claims 8 or 9, wherein prior to depositing the two substances on the substrate (S) the substrate (S) is heated to a temperature up to a temperature above room temperature, e.g. to a temperature of 200°C.

12. Process according to any one of claims 8 to 11, wherein between a holder (3) of the substrate (S) or the surface of the substrate (S), respectively, and a grounded wall (20) of the vacuum chamber (2) in which the two substances are deposited on the substrate (S) a high frequency bias voltage (HF) is applied.

13. Process according to any one of claims 10 to 12, wherein in the spatial area of the target (T2) of the crystalline substance an inert gas is supplied, and wherein in the spatial area of the target (T1) of the amorphous substance the reactive gas, e.g. nitrogen, is supplied.
